(19) Europäisches Patentamt
European Patent Office
Office européen des brevets

(11) **EP 4 353 513 A1**

(12) **EUROPEAN PATENT APPLICATION**
published in accordance with Art. 153(4) EPC

(43) Date of publication:
**17.04.2024 Bulletin 2024/16**

(21) Application number: **22852985.5**

(22) Date of filing: **01.08.2022**

(51) International Patent Classification (IPC):
**B60L 3/00** (2019.01) **B60L 15/20** (2006.01)
**G01P 3/56** (2006.01)

(52) Cooperative Patent Classification (CPC):
**B60L 3/00; B60L 15/20; G01P 3/56; Y02T 10/72**

(86) International application number:
**PCT/JP2022/029415**

(87) International publication number:
**WO 2023/013566 (09.02.2023 Gazette 2023/06)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **06.08.2021 JP 2021129863**

(71) Applicant: **Mitsubishi Jidosha Kogyo Kabushiki
Kaisha
Tokyo 108-8410 (JP)**

(72) Inventors:
• **TAKAHASHI, Ryota**
  **Tokyo 108-8410 (JP)**
• **TAKAHASHI, Naoki**
  **Tokyo 108-8410 (JP)**
• **MATSUO, Shunsuke**
  **Tokyo 108-8410 (JP)**
• **OKAMURA, Yutaro**
  **Tokyo 108-8410 (JP)**
• **KOGA, Ryosuke**
  **Tokyo 108-8410 (JP)**

(74) Representative: **Vossius & Partner
Patentanwälte Rechtsanwälte mbB
Siebertstrasse 3
81675 München (DE)**

(54) **VEHICLE CONTROL DEVICE**

(57)    A vehicle control device (10) that controls an electric motor (2) that drives a wheel (5) of the vehicle, the vehicle control device (10) includes: a first calculating unit (11) that calculates a first vehicle body velocity ($VB_{real}$) based on an angular velocity of the wheel (5); a second calculating unit (12) that calculates a second vehicle body velocity ($VB_{ref}$) based on an angular velocity of the electric motor (2) at a cycle shorter than a cycle of the first calculating unit (11); an estimating unit (13) that estimates an estimated vehicle body velocity according to a state of the vehicle (1), the estimated vehicle body velocity ($VB_{ctrl}$) being calculated by using the first vehicle body velocity ($VB_{real}$) and the second vehicle body velocity ($VB_{ref}$) in combination; and a controlling unit (16) that controls, based on the estimated vehicle body estimated by the estimating unit (13), the electric motor (2).

FIG. 1

**Description**

TECHNICAL FIELD

The present invention relates to a vehicle control device that controls electric motors that drive wheels of a vehicle.

BACKGROUND

In regard of a conventional vehicle mounted with an electric motor serving as a drive source, a vehicle control device has been known which controls the electric motor on the basis of a vehicle body velocity (vehicle velocity) calculated from a detection signal of a wheel velocity sensor. A wheel velocity sensor is attached to, for example, a drive wheel or a driven wheel of a vehicle (see Patent Document 1).

In the meantime, a detection signal of a typical wheel velocity sensor responds with a delay to the operation of an electric motor. For example, the rotating state of the wheel does not change until the driving force outputted from the electric motor is transmitted to the wheel and the driving force is transmitted to the road surface via the wheel. For the above, since a change in a detection signal of a wheel velocity sensor in response to an operation of the electric sensor tends to delay, preferable control responsiveness may not be obtained in some cases. As a solution to the above, a technique has been proposed which detects the rotating state of the electric motor, in place of a wheel velocity, with a resolver and estimates a vehicle body velocity based on the detection signal by the resolver (see Patent Document 2).

[Prior Art Document]

[Patent Document]

[Patent Document 1] JP 4637136 B
[Patent Document 2] JP 2017-73921 A

[SUMMARY OF INVENTION]

[PROBLEMS TO BE SOLVED BY INVENTION]

However, the rotating state of a resolver does not always coincide with the rotating state of a wheel. For this reason, as described in Patent Document 2, it is difficult to accurately estimate the vehicle body velocity by simply switching the detection signal by a wheel velocity sensor to the detection signal of a resolver, which may lower the running performance of the vehicle. In addition, if a deviation occurs in the estimated vehicle body velocity when the detection signal by a wheel velocity sensor is switched to the detection signal of a resolver, the acceleration feeling of the vehicle may be temporarily impaired to give uncomfortable feeling. The above technical problems are noticeable in a vehicle control device that controls respective driving forces of the wheels while adjusting the slip state of each individual wheel on the basis of a vehicle body velocity.

With the foregoing problems in view, one of the objects of the present disclosure is to provide a vehicle control device that can enhance the running performance by enhancing the accuracy in estimating a vehicle body velocity. In addition to this object, influences and effects which are derived from each configuration of an embodiment to carry out the invention to be described below and which conventional technique does not attain can be regarded as other objects of the present disclosure.

[MEANS TO SOLVE PROBLEM]

The present embodiment can be achieved by means of an embodiment and an application. The disclosed vehicle control device solves at least part of the above problem.

The vehicle control device disclosed herein controls electric motors that drive wheels of a vehicle. The vehicle control device includes a first calculating unit that calculates a first vehicle body velocity based on an angular velocity of the wheel; a second calculating unit that calculates a second vehicle body velocity based on an angular velocity of the electric motor at a cycle shorter than a cycle of the first calculating unit; an estimating unit that estimates an estimated vehicle body velocity according to a state of the vehicle, the estimated vehicle body velocity being calculated by using the first vehicle body velocity and the second vehicle body velocity in combination; and a controlling unit that controls, based on the estimated vehicle body estimated by the estimating unit, the electric motor.

[Effect of Invention]

The disclosed vehicle control device can driving performance enhancing the accuracy in estimating a vehicle body velocity.

[Brief Description of Drawings]

FIG. 1 is a diagram illustrating a vehicle that adopts a vehicle control device according to an embodiment;
FIG. 2 is a schematic diagram showing a structure of a driving system of the vehicle of FIG. 1;

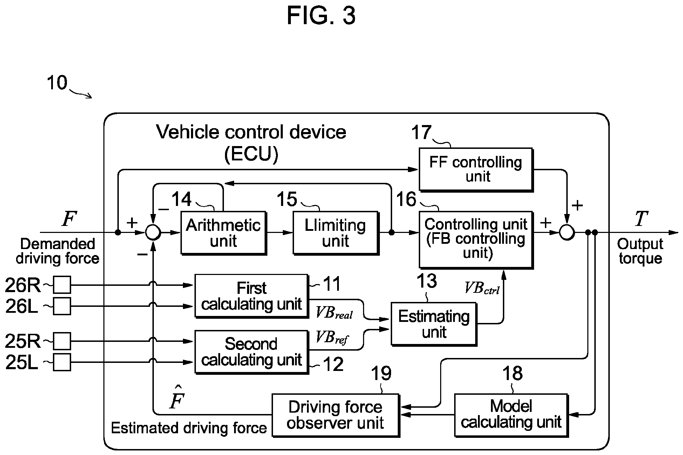

FIG. 3 is a block diagram showing a configuration of a vehicle control device of FIG. 1; and
FIG. 4 is a map showing a relationship between the weighting factor set by an estimating unit of FIG. 1 and a vehicle velocity; and
FIG. 5 is a block diagram for explaining a modification of the vehicle controlling device shown in FIG. 3.

[Embodiment to Carry out Invention]

1. Vehicle

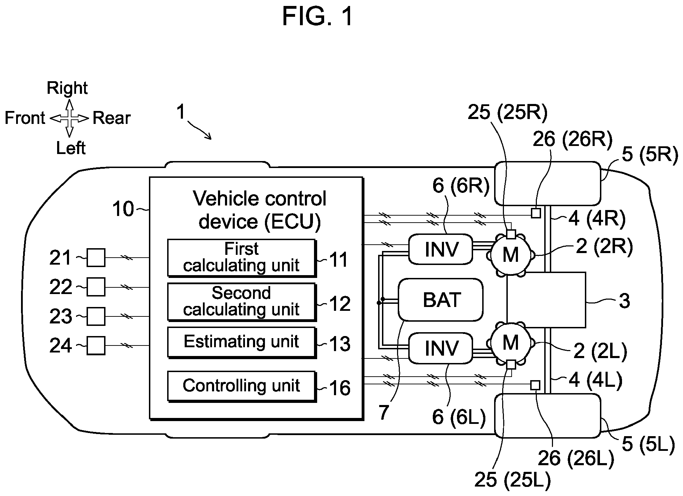

A vehicle control device according to an embodiment is applied to a vehicle 1 shown in FIG. 1. The vehicle 1 includes wheels 5 (left and right wheels) arranged side by side in the vehicle width direction, a power distribution mechanism 3 (differential mechanism) for applying a torque difference to these wheels 5, and a pair of electric motors 2 each coupled to the power distribution mechanism 3. The alphabetical character R or L appended to a numerical reference sign indicate the arranged position of the element represented by the reference signs (i.e., whether the element is on the left or right side of the vehicle). For example, a reference sign 5R represents one (i.e., right wheel) of the wheels 5 positioned on the right side (Right) of the vehicle 1, and a reference sign 5L represents the other (i.e., left wheel) positioned on the left side (Left) of the vehicle 1.

The electric motors 2 have a function of driving at least either of front wheels and rear wheels of the vehicle 1, and may have a function of driving all four wheels. Between the pair of electric motors 2 positioned on the right side is also referred to as a right electric motor 2R (right motor) and the other positioned on the left side is also referred to as a left electric motor 2L (left motor). The right electric motor 2R and the left electric motor 2L operate independently of each other, and can individually output the driving forces having different magnitudes from each other. These electric motors 2 are connected to the power distribution mechanism 3 via a pair of reduction mechanism provided separately from each other. The right electric motor 2R and the left electric motor 2L of this embodiment have the same rated power and are provided in a pair.

The vehicle 1 includes a power distribution device 3 that amplifies the torque difference between the pair of electric motors 2 and distributes the torque to left and right wheels 5. The power distribution mechanism 3 of the present embodiment is a differential mechanism having an Active Yaw Control (AYC) function, and is interposed between an axle 4 (left axle 4L) connected to the left wheel 5L and an axle 4 (right axle 4R) connected to the right wheel 5R. The yaw control function is a function that adjusts the yaw moment by actively controlling the sharing ratio of the driving forces (driving torques) of the wheels 5 and stabilizes the posture of the vehicle. A planetary gear mechanism, a differential gear mechanism, and the like are incorporated in the power distribution mechanism 3. The vehicle driving apparatus including the pair of electric motors 2 and the power distribution device 3 is also referred to as a Dual-Motor AYC (DM-AYC) device.

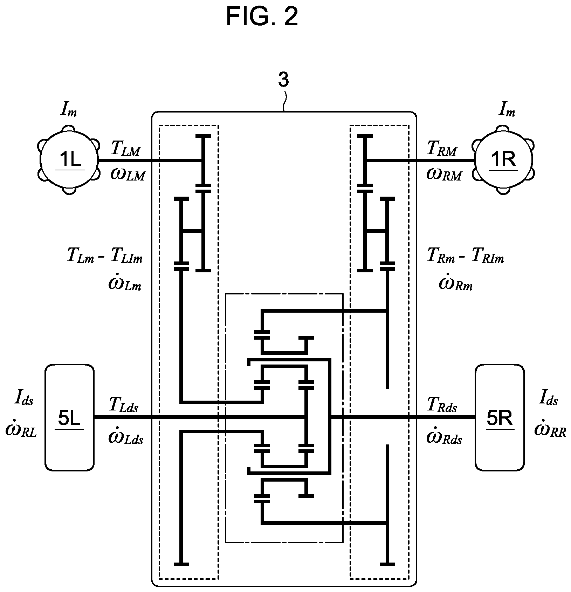

As shown in FIG. 2, the power distribution mechanism 3 includes a pair of reduction mechanisms (gear trains surrounded by dashed lines in FIG. 2) for reducing the rotational velocity of the electric motors 2 and a transmission mechanism (gear trains surrounded by one-dot dashed lines in FIG. 2). Each reduction mechanism is a mechanism that increases the torque by reducing the torque (driving force) output from the corresponding electric motor 2. The reduction ratio of the reduction mechanism is appropriately set according to the output characteristic and the performance of the electric motor 2. If the torque performances of the electric motors 2 are sufficiently high, the reduction mechanisms may be omitted. The transmission mechanism is a mechanism that amplifies the difference between torques transmitted to the wheels 5.

The transmission mechanism of the power distribution mechanism 3 shown in FIG. 2 includes a pair of planetary gear mechanisms. These planetary gear mechanisms have a structure in which rotation axes of planetary gears provided on respective carriers are connected to each other. Each carrier supports the planetary gear so as to be able to rotate, and supports the planetary gear so as to be able to revolve between the sun gear and the ring gear. The driving force transmitted from the left and right electric motors 2 is inputted into the ring gear and the sun gear of one of the planetary gear mechanisms. The driving force transmitted to the wheels 5 is taken out from the sun gear and the carrier of the other planetary gear mechanism. The other planetary gear mechanism does not have a ring gear. Note that the structure of the power distribution mechanism 3 shown in FIG. 2 is merely exemplary for achieving the yaw control function, and can be replaced with another known structures.

The electric motors 2L and 2R are electrically connected to the battery 7 via respective inverters 6 (6L and 6R). The inverters 6 are converting devices (DC-AC converting devices) that mutually convert the electric power (DC power, Direct Current power) of the DC circuit of the battery 7 side and the electric power (AC power, Alternating Current power) of the AC circuit of the electric motor 2 side. The battery 7 is, for example, a lithium-ion secondary battery or a nickel-metal hydride secondary battery. The battery 7 is a storage cell capable of supplying a high-voltage DC current of several hundred volts. While the electric motors 2 are power running, the DC power is converted into AC power by the inverters 6 and the converted AC power is then supplied to the electric motors 2. At the time of power generation of motor 2, the generated electric power is converted into DC electric power by inverter 6 and is charged into battery 7. The operating status of each inverter 6 is controlled by the vehicle control device 10.

The vehicle control device 10 is one of electronic controlling unit (ECU) mounted on the vehicle 1. The vehicle control device 10 includes a processor (central processing unit), a memory (main memory), a storage device (storage), an interface device, and the like, which do not appear in the drawings, and these elements are communicably coupled to each other via an internal bus. The contents of the determination and the control performed by the vehicle control device 10 are recorded and stored as firmware or an application program in the memory, and when the program is to be executed, the contents of the program are expanded in a memory space and executed by the processor.

As shown in FIG. 1, an accelerator position sensor 21, a brake sensor 22, a steering angle sensor 23, a mode selection switch sensor 24, resolvers 25, and wheel velocity sensors 26 are connected to the vehicle control device 10. The accelerator position sensor 21 is a sensor that detects the amount (accelerator opening degree) of depressing of the accelerator pedal and the depression velocity. The brake sensor 22 is a sensor that detects the amount (brake pedal stroke) of depressing of the brake pedal and the depression velocity. The steering angle sensor 23 is a sensor that detects a steering angle (actual rudder angle or steering angle of the steering) of the wheels 5. The mode selection switch sensor 24 is a device in which a switch for setting a running mode (for example, a snow mode, a tarmac mode) of the vehicle 1 that can be arbitrarily selected by an occupant and a sensor that detects an operation status of the switch are integrated.

The resolvers 25 are sensors that detect the rotational angular velocities (i.e., motor angular velocity $\omega_{Rm}$, $\omega_{Lm}$), and are provided one for each of the electric motors 2. The wheel velocity sensors 26 are sensors that detect rotational angular velocities (wheel angular velocity $\omega_{Rds}$, $\omega_{Lds}$) outputted from the power distribution mechanism 3 to the axles 4, and are provided in the vicinity of connecting points between the power distribution mechanism 3 and the axles 4. The vehicle control device 10 controls the operating status of the inverters 6 on the basis of the information detected by these sensors 21 to 26 and thereby controls the outputs of the pair of electric motors 2. Note that the type of sensor that detects the rotational angular velocity of each electric motor 2 is not limited to the resolver 25, and may alternatively be another sensor (e.g., a hall sensor or an encoder).

2. Vehicle control device

As shown in FIG. 1, at least a first calculating unit 11, a second calculating unit 12, an estimating unit 13, and a controlling unit 16 (FB controlling unit) are provided inside the vehicle control device 10. In the present embodiment, an arithmetic unit 14, a limiting unit 15, a FB controlling unit 17, a model calculating unit 18, and a driving force observer unit 19 are provided in addition to the above elements, a model calculating unit 16 and a driving force observer unit 17 are provided. These elements are obtained by classifying the functions of the vehicle control device 10 for descriptive convenience. These elements may be each described as an independent program and may also be described as a combined program of multiple elements. A program corresponding to each element is stored in the memory or the storage device of the vehicle control device 10 and executed by the processor.

The first calculating unit 11 calculates first vehicle body velocities $VB_{real}$ based on the angular velocities of the wheels 5 (drive wheels) of the vehicle 1 (the wheel angular velocities $\omega_{Lds}$ and $\omega_{Rds}$ detected by the wheel velocity sensors 26). Here, the first vehicle body velocity $VB_{real}$ is calculated for each individual wheel 5. The first vehicle body velocity $VB_{real}$ is calculated as a value being proportional to the product of the angular velocity of a corresponding wheel 5 and the effective radius r of the wheel 5. The calculation cycle of the first vehicle body velocity $VB_{real}$ is a cycle that depends on the accuracy (angular resolution) of the wheel velocity sensor 26 and/or the communication cycle of a communication path connecting the wheel velocity sensor 26 and vehicle control device 10, and is, for example, 10 to 20 [ms].

The second calculating unit 12 calculates second vehicle body velocities $VB_{ref}$ at a cycle shorter than that of the first calculating unit 11 on the basis of the angular velocities of the electric motors 2 (motor angular velocities $\omega_{Rm}$ and $\omega_{Lm}$ detected by the resolvers 25). In this example, the respective driving torques of the two wheels 5 (drive wheels) coupled to the electric motors 2 are calculated on the basis of motor angular velocities $\omega_{Rm}$, $\omega_{Lm}$ of the two electric motors 2. The estimated driving forces that the wheels 5 transmit to the road surface are calculated on the basis of the driving torques and inertia torques of the wheels 5. A second vehicle body velocity $VB_{ref}$ is calculated by obtaining a quotient by dividing the sum of the estimated driving forces by the physical weight M of the vehicle 1 and then integrating the quotient. The calculation cycle of the second vehicle body velocity $VB_{ref}$ is set to be shorter than at least that of the first calculating unit 11 (a cycle shorter than the calculation cycle of the first vehicle body velocity $VB_{real}$ by the first calculating unit 11). In this embodiment, the each resolver 25 and vehicle control device 10 are connected to each other via a dedicated line (hard wire), and the second vehicle body velocity $VB_{ref}$ is calculated at a calculation cycle of about 1 to 2 [ms].

The rotation velocities ($\omega_{Rds}$ and $\omega_{Lds}$) of the wheels 5 are calculated from motor angular velocities $\omega_{Rm}$, $\omega_{Lm}$ on the basis of the relationships shown in Expressions 1 and 2. The terms $b_1$ and $b_2$ in the expressions are the equivalent second velocity ratios determined by the structures of the gears incorporated in the power distribution mechanism 3. The driving torques $T_{Rds}$ and $T_{Lds}$ of the wheels 5 are calculated on the basis of Expressions 3 and 4. In the expressions, G represents a reduction ratio of the reduction mechanism, $I_m$ represents a motor inertia, and $T_{Rm}$ and $T_{Lm}$ each represent motor torque.

[Math 1]

Expression 1

$$\dot{\omega}_{Rm} = \{(b_2 + 1)\dot{\omega}_{Rds} - b_2 \cdot \dot{\omega}_{Lds}\}$$

Expression 2

$$\dot{\omega}_{Lm} = \{(b_2 + 1)\dot{\omega}_{Lds} - b_2 \cdot \dot{\omega}_{Rds}\}$$

Expression 3

$$T_{Rds} = \{(b_2 + 1)T_{Rm} - b_1 T_{Lm}\} - \left[\{(b_2 + 1)^2 + b_1^2\}G^2 I_m - \{b_1(b_1 + 1) + b_2(b_2 + 1)\}G^2 I_m \frac{\dot{\omega}_{Lds}}{\dot{\omega}_{Rds}}\right]\dot{\omega}_{Rds}$$

Expression 4

$$T_{Lds} = \{(b_1 + 1)T_{Lm} - b_2 T_{Rm}\} - \left[\{(b_1 + 1)^2 + b_2^2\}G^2 I_m - \{b_1(b_1 + 1) + b_2(b_2 + 1)\}G^2 I_m \frac{\dot{\omega}_{Rds}}{\dot{\omega}_{Lds}}\right]\dot{\omega}_{Lds}$$

The torques $T_{Rroad}$ and $T_{Lroad}$ transmitted from the wheels 5 to the road surface are calculated from the driving torques $T_{Rds}$, and $T_{Lds}$ and the inertia torque of the wheels 5 as shown in Expressions 5 and 6. The term $I_{ds}$ in the equation represents the inertia of the wheel 5. The driving forces (estimated driving forces) $F_{Rroad}$ and $F_{Lroad}$ transmitted from the respective wheels 5 to the road surface are calculated by dividing the respective torques $T_{Rroad}$ and $T_{Lroad}$ by the effective radii r of the wheels 5, as shown in Expressions 7 and 8. The second vehicle body velocity $VB_{ref}$ is calculated by integrating the quotient obtained by dividing the sum of the estimated driving forces $F_{Rroad}$ and $F_{Lroad}$ of the wheels 5 by the physical weight M of the vehicle 1, as shown in Expression 9.

[Math 2]

Expression 5

$$T_{Rroad} = T_{Rds} - I_{ds} \cdot \dot{\omega}_{Rds}$$

Expression 6

$$T_{Lroad} = T_{Lds} - I_{ds} \cdot \dot{\omega}_{Lds}$$

Expression 7

$$F_{Rroad} = \frac{T_{Rroad}}{r}$$

Expression 8

$$F_{Lroad} = \frac{T_{Lroad}}{r}$$

Expression 9

$$VB_{ref} = \int_0^t \left\{ \frac{(F_{Lroad} + F_{Rroad})}{M} \right\} dt$$

The estimating unit 13 estimates an estimated vehicle body velocity $VB_{ctrl}$ calculated by using the first vehicle body velocity $VB_{real}$ and the second vehicle body velocity $VB_{ref}$ in combination according to the state of the vehicle 1. The estimated vehicle velocity $VB_{ctrl}$ is calculated as the weighted mean value of the first vehicle body velocity $VB_{real}$ and the second vehicle body velocity $VB_{ref}$ as shown in the following Expression 10. The symbol W in Expression represents a weighting factor of the first vehicle body velocity $VB_{real}$ and the term (1-W) represents a weighting factor of the second vehicle body velocity $VB_{ref}$. Examples of the condition on which the estimation of the estimated vehicle body velocity $VB_{ctrl}$ is performed include being immediately after the start of the vehicle 1 (that a predetermined time has not elapsed since the start), that the running velocity of the vehicle 1 (vehicle velocity V) is extremely low (for example, vehicle velocity V is zero or more and the predetermined vehicle velocity or less), and that running mode of the vehicle 1 is a Tarmac mode (that the road surface is not slippery). The calculated estimated vehicle body velocity $VB_{ctrl}$ is transmitted to the control unit 16.
[Math 3]

Expression 10

$$VB_{ctrl} = W \cdot VB_{real} + (1 - W) \cdot VB_{ref}$$

The weights (values of weighting factors) for each of the first vehicle body velocity $VB_{real}$ and the second vehicle body velocity $VB_{ref}$ are determined according to at least the state of the vehicle 1. For example, the weighting factor is set according to a vehicle velocity V, an elapsed time since the vehicle 1 has started, or the driving mode. When the vehicle speed V is used, the estimated vehicle body velocity $VB_{ctrl}$ calculated in the previous calculation cycle may be used, or the vehicle speed V calculated in the model calculating unit 18 to be described below may be used. The present embodiment assumes that, on the basis of the second vehicle body velocity $VB_{ref}$, the weighting factor W of the first vehicle body velocity $VB_{real}$ and the weighting factor (1-W) of the second vehicle body velocity $VB_{ref}$ are set. The value of the weighting factor W of the first vehicle body velocity $VB_{real}$ is set to be smaller as the first vehicle body velocity $VB_{real}$ or ther second vehicle body velocity $VB_{ref}$ is lower. Therefore, the weighting factor (1-W) of the second vehicle body velocity $VB_{ref}$ is set to be larger as the first vehicle body velocity $VB_{real}$ or the second vehicle body velocity $VB_{ref}$ is lower.

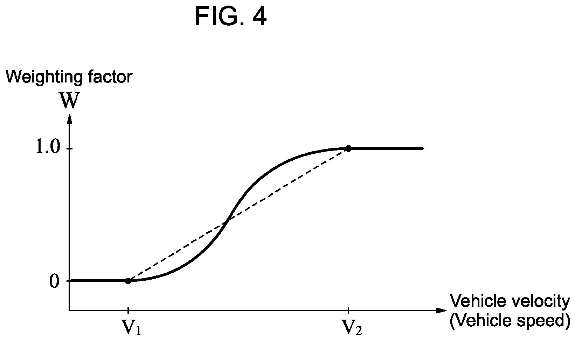

FIG. 4 is a graph illustrating an example of a relationship between a weighting factor W of the first vehicle body velocity $VB_{real}$ and a vehicle speed V (e.g., the first vehicle body velocity $VB_{real}$ or the second vehicle body velocity $VB_{ref}$). In the graph shown in FIG. 4, when the vehicle velocity V is less than the first predetermined value $V_1$, the value of the weighting factor W is set to zero, and when the vehicle speed V exceeds the second predetermined value $V_2$, the value of the weighting factor W is set to one. In the velocity range of the vehicle velocity V between a first predetermined value $V_1$ and a second predetermined value $V_2$ both inclusive, the value of the weighting factor W is set to be smaller as the vehicle velocity V is lower but to be larger as the vehicle velocity V is higher.

Alternatively, a first weighting factor $W_1$ having a value corresponding to first vehicle body velocity $VB_{real}$ and

a second weighting factor $W_2$ having a value corresponding to second vehicle body velocity $VB_{ref}$ may be set, and the product of these values may be set to the final weighting value W. In this case, the first weighting factor $W_1$ is set to be smaller as the first vehicle body velocity $VB_{real}$ is lower, for example. The second weighting factor $W_2$ is also set to be smaller, for example, as the second vehicle body velocity $VB_{ref}$ is lower.

When abnormality occurs in the wheel velocity sensors 26 that detect the angular velocities (wheel angular velocities $\omega_{Lds}$ and $\omega_{Rds}$) of the wheels 5, the weighting factor W of the first vehicle body velocity $VB_{real}$ may be set to be small, and the weight (1-W) of the second vehicle body velocity $VB_{ref}$ may be set to be large. For example, the weighting factor W of the first vehicle body velocity $VB_{real}$ may be set to a value close to zero, and the weight (1-W) of the second vehicle body velocity $VB_{ref}$ may be set to a value close to one. In this case, the detection signals related to the calculation of the estimated vehicle body velocity $VB_{ctrl}$ is substantially switched from signals of the wheel velocity sensors 26 to those of the resolvers 25.

The value of the first predetermined value $V_1$ is at least 0 (km/h) or more, and is set to, for example, about 2 to 4 (km/h). Further, the value of the second predetermined value $V_2$ is set to be at least greater than the first predetermined value $V_1$, and is set to, for example, about 6 to 10 (km/h). As indicated by a dashed line in FIG. 4, the weighting factor W may be increased with a constant gradient with an increase in the vehicle speed V. Alternatively, as shown by a solid line in FIG. 4, the relationship between the weighting factor W and the vehicle speed V may be set so as to trace a smooth curved line.

An arithmetic unit 14 independently of each other calculates target slip ratios y (slip ratio command values) serving as target values of the slip ratios of the wheels 5. The value of each target slip ratio y is calculated on the basis of at least the demanded driving force of the vehicle 1. In the present embodiment, the value of each target slip ratio y is calculated on the basis of the demanded driving force and the estimated driving force of the vehicle 1. For example, each target slip ratio y is calculated on the basis of a value obtained by integrating a value (error) obtained by subtracting the estimated driving force from the demanded driving force. The demanded driving force is calculated on the basis of respective piece of information detected by the sensors 21 to 26, for example.

If the value of the target slip ratio y calculated by the arithmetic unit 14 is excessively large, the value is clipped in a range equal to or smaller than the upper limit value $y_{max}$ set by the limiting unit 15 to be described below. In this case, the value exceeding the upper limit value $y_{max}$ is discarded as the surplus value. Therefore, in order to reflect the surplus value in the next and subsequent arithmetic operations, a calculation configuration may be adopted in which the surplus value is multiplied with a predetermined gain and the obtained product is then introduced to the upstream side of the arithmetic unit 14 and is subtracted from the demanded driving force.

The limiting unit 15 independently of each other sets the upper limit values $y_{max}$ of the target slip ratios y on the basis of at least vehicle velocity V of the vehicle 1, and limits the target slip ratios y calculated by the arithmetic unit 14 to a value equal to or less than the upper limit values $y_{max}$. The vehicle velocity V here may be a first vehicle body velocity $VB_{real}$, but is preferably a second vehicle body velocity $VB_{ref}$. The upper limit values $y_{max}$ function as the limiters for the respective target slip ratios y.

The controlling unit 16 (FB controlling unit) calculates a feedback controlling amount of each wheel 5 so as to obtain a wheel velocity that results in a target slip ratio y limited by the limiting unit 15. Here, the product of the sum of the target slip ratio y and one and the estimated vehicle body velocity $VB_{ctrl}$ calculated by the estimating unit 13 is calculated. Further, the angular velocity target value $\omega^*$ of the wheel 5 is calculated by dividing the product by the effective radius r of the wheel 5. Thereafter, the amount of torque feedback control (for example, PI control amount) is calculated such that, for example, the difference between the actual angular velocity $\omega$ of the wheel 5 at a previous calculating cycle and the angular velocity target value $\omega^*$ of the wheel 5 becomes small (ideally, the difference becomes 0). Instead of the angular velocity $\omega$ at the previous calculation cycle, an estimated value of the angular velocity $\omega$ calculated by the model calculating unit 18 may be used.

The FF controlling unit 17 calculates an amount of feed-forward control based on a demanded driving force of the wheel 5. In this example, the demanded wheel torque of the wheel 5 is calculated by multiplying the demanded driving force and the effective radius r of the wheel 5. The sum of the demanded wheel torque calculated by the FF controlling unit 17 and the amount of feedback control calculated by the controlling unit 16 is the final output torque T for the wheel 5. On the basis of the output torque T, the operating state of the pair of the electric motors 2 are controlled.

The model calculating unit 18 calculates, based on a predetermined vehicle model, estimated values of a vehicle velocity, a wheel velocity (angular velocity $\omega$), a vehicle body acceleration, and the like when the wheel 5 is driven by the output torque T These estimated values can be derived, for example, by applying a known scheme of arithmetic for converting the torque of the electric motor 2 into the torque of the axle 4.

The driving force observer unit 19 calculates an estimated driving force based on at least the output torque T Here, the inertia torque $J_{ws}$ of each of the wheels 5 is calculated on the basis of the wheel velocity calculated by the model calculating unit 18, for example. Then, the estimated axle torque is calculated by subtracting the inertia torque $J_{ws}$ from the output torque T The estimated driving force is calculated by dividing the estimated axle torque by the effective radius r of corresponding one of the wheel 5.

The above inertia torque $J_{ws}$ can also be calculated from values detected by the resolvers 25. For example, on the basis of the above expression 1 and expression 2, the wheel velocity of wheel 5 (each of the angular velocities $\omega_{Rds}$ and $\omega_{Lds}$ on the drive shaft side) is estimated from the motor angular velocities $\omega_{Rm}$ and $\omega_{Lm}$ detected by the corresponding resolvers 25. Further, each inertia torque $J_{ws}$ of the wheels 5 corresponds to the second terms of the right sides in expressions 3 and 4, and can therefore be calculated from the respective wheel velocities. Thereafter, the estimated driving force is calculated by dividing the estimated axle torque obtained by subtracting the inertia torque $J_{ws}$ from the output torque T by the effective radius r of corresponding one of the wheels 5.

3. Action and Effect

(1) In the above embodiment, the vehicle control device 10 is provided with the first calculating unit 11, the second calculating unit 12, the estimating unit 13, and the controlling unit 16. The first calculating unit 11 calculates the first vehicle body velocity $VB_{real}$ based on the angular velocity of the wheel 5. The second calculating unit 12 calculates the second vehicle body velocity $VB_{ref}$ at a cycle shorter than the calculation cycle of the first calculating unit 11 on the basis of the angular velocity of the electric motor 2. The estimating unit 13 estimates estimated vehicle body velocity $VB_{ctrl}$ calculated by using the first vehicle body velocity $VB_{real}$ and the second vehicle body velocity $VB_{ref}$ in combination according to the state of the vehicle 1. The control unit 16 controls the electric motor 2 based on the estimated vehicle body velocity $VB_{ctrl}$ estimated by the estimating unit 13.
With such a configuration, by reflecting the second vehicle body velocity $VB_{ref}$ at, for example, the start or extremely low-velocity running of the vehicle 1 in the estimated vehicle body velocity $VB_{ctrl}$, the control responsiveness can be enhanced. On the other hand, by using not only the second vehicle body velocity $VB_{ref}$ but also the first vehicle body velocity $VB_{real}$ in combination, the actual rotating state of the wheel 5 as well as the operating state of the electric motor 2 can be appropriately reflected in the estimated vehicle body velocity $VB_{ctrl}$. Therefore, according to the above-described embodiment, the estimation accuracy of estimated vehicle body velocity $VB_{ctrl}$ can be enhanced, so that the running performance of vehicle 1 can be enhanced.
(2) In the above embodiment, the estimating unit 13 estimates the weighted average of the first vehicle body velocity $VB_{real}$ and the second vehicle body velocity $VB_{ref}$ as the estimated vehicle body velocity $VB_{ctrl}$. With such a configuration, each of the first vehicle body velocity $VB_{real}$ and the second vehicle body velocity $VB_{ref}$ can be reflected in the estimated vehicle body velocity $VB_{ctrl}$ by using the weighting factor set in conformity with a predetermined rule. Accordingly, for example, a sudden change or an unexpected change in the estimated vehicle body velocity $VB_{ctrl}$ can be suppressed, so that the stability of the estimated vehicle body velocity $VB_{ctrl}$ can be enhanced and the running performance of the vehicle 1 can also be enhanced.
(3) In the above embodiment, in calculating a weighted average, the weight W of the first vehicle body velocity $VB_{real}$ is set to be smaller and the weight (1-W) of the second vehicle body velocity $VB_{ref}$ is set to be larger if the first vehicle body velocity $VB_{real}$ or the second vehicle body velocity $VB_{ref}$ is lower. With such a configuration, it is possible to calculate the estimated vehicle body velocity $VB_{ctrl}$ that emphasizes the angular velocities of the electric motors 2 when the vehicle 1 is running at an extremely low speed, so that the control responsiveness can be enhanced. Further, after the vehicle velocity is increased to some extent, the estimated vehicle body velocity $VB_{ctrl}$ that emphasizes the actual angular velocity of the wheels 5 can be calculated, so that the control stability can be enhanced. For example, it is possible to suppress a decrease in accuracy due to an integration error in the second calculating unit 12.
(4) In the above embodiment, when abnormality occurs in the wheel velocity sensors 26 that detect the angular velocities (wheel angular velocities $\omega_{Lds}$ and $\omega_{Rds}$) of the wheels 5, the weighting factor W of the first vehicle body velocity $VB_{real}$ may be set to be small, and the weight (1-W) of the second vehicle body velocity $VB_{ref}$ may be set to be large. For example, by setting the weight (1-W) of the second vehicle body velocity $VB_{ref}$ to a value close to 1, the detection signal related to the calculation of the estimated vehicle body velocity $VB_{ctrl}$ may be substantially switched from a signal of the wheel velocity sensor 26 to that of the resolver 25. With such a configuration, since the value of the second vehicle body velocity $VB_{ref}$ that is more reliable than the first vehicle body velocity $VB_{real}$ can be reflected in the value of estimated vehicle body velocity $VB_{ctrl}$, it is possible to enhance the estimation accuracy of the estimated vehicle body velocity $VB_{ctrl}$.
(5) In the above embodiment, the second calculating unit 12 calculates the estimated driving forces $F_{Rroad}$ and $F_{Lroad}$, which the wheels 5 transmit to the road surface, on the basis of the driving torques $T_{Rds}$, and $T_{Lds}$ of the wheels 5 derived from the angular velocity of the electric motors 2 and the inertia torque of the wheels 5, and also calculates the second vehicle body velocity $VB_{ref}$ by integrating the quotient obtained by dividing the sum of the estimated driving forces $F_{Rroad}$ and $F_{Lroad}$ by the physical weight M of the vehicle 1. With such a configuration, the second vehicle body velocity $VB_{ref}$ can be accurately calculated, and the running performance of the vehicle 1 can be enhanced.

(6) In the above embodiment, the vehicle control device 10 is applied to the vehicle 1 provided with the power distribution mechanism 3 (differential mechanism) that applies a torque difference to the wheels 5 (left and right wheels) and a pair of electric motors 2 coupled to the power distribution mechanism 3. The vehicle control device 10 controls the slip states of the wheels 5 (left and right wheels) independently of each other by controlling the operating states of the pair of electric motors 2, and specifically controls the slip state of the each individual wheel 5 (each of the left and right wheels) by using the estimated vehicle body velocity $VB_{ctrl}$. With such a configuration, the difference between the estimated slip amount and the actual slip amount can be made small, so that the magnitude of suppression torque for suppressing the slip of each wheel 5 can be accurately set. For example, it is possible to prevent undesired situation that the suppression torque becomes excessively large at the start of the vehicle 1, and consequently the starting performance (running performance) of the vehicle 1 can be enhanced.

4. Modifications

The foregoing embodiment is merely illustrative and is not intended to preclude the application of various modifications and techniques not explicitly set forth in the present examples. The configurations of the present embodiment can be variously modified without departing from the scope thereof. Also, the configuration can be selected or omitted according to the requirement or appropriately combined.

For example, the above embodiment assumes that the vehicle control device 10 is applied to the rear wheels of the vehicle 1, but alternatively, the vehicle control device 10 may be similarly applied to the front wheels or to both the front and rear wheels. In addition, the above embodiment illustrates the vehicle control device 10 that controls the electric motors 2 of the vehicle 1 provided with the power distribution mechanism 3, but alternatively the vehicle control device 10 can also be applied to a vehicle 1 not having the power distribution mechanism 3. The effects same as those of the above embodiment can be obtained by applying the above vehicle control device 10 to the vehicle 1 provided with at least the electric motors 2 that drive the wheels 5.

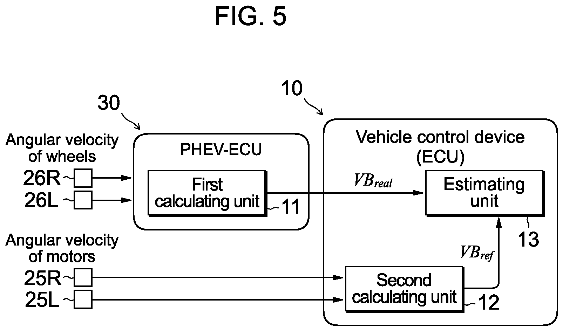

In addition, the above embodiment describes a case where the first calculating unit 11 and the second calculating unit 12 are included in a single vehicle control device 10, but alternatively each of the elements included in the vehicle control device 10 may be separated and a function of each element may be accomplished by multiple electronic controlling units. For example, as shown in FIG. 5, the first calculating unit 11 may be incorporated in a PHEV-ECU 30 (second vehicle control device) separately provided from the vehicle control device 10, and the second calculating unit 12 and the estimating unit 13 may be incorporated in the vehicle control device 10. In this case, some cycles of communication between the vehicle control device 10 and the PHEV-ECU 30 may prolong the transmission cycle of the first vehicle velocity $VB_{real}$ to the estimating unit 13. However, the same effects as those in the above embodiment would be obtained by, as performed in the above embodiment, controlling the electric motors 2, using the estimated vehicle bodylular velocity $VB_{ctrl}$ calculated by using the first vehicle body velocity $VB_{real}$ and the second vehicle body velocity $VB_{ref}$ in combination.

[Description of Reference Signs]

| | |
|---|---|
| 1 | vehicle |
| 2 | electric motor |
| 3 | power distribution mechanism |
| 4 | wheel axle |
| 5 | wheel (left and right wheels) |
| 6 | inverter |
| 7 | battery |
| 10 | vehicle control device (ECU) |
| 11 | first calculating unit |
| 12 | second calculating unit |
| 13 | estimating unit |
| 14 | arithmetic unit |
| 15 | limiting unit |
| 16 | controlling unit (FB controlling unit) |
| 17 | FF controlling unit |
| 18 | model calculating unit |
| 19 | driving force observer unit |

| | |
|---|---|
| 21 | accelerator position sensor |
| 22 | brake sensor |
| 23 | steering angle sensor |
| 24 | mode selection switch sensor |
| 25 | resolver |
| 26 | wheel velocity sensor |
| 30 | PHEV-ECU |
| $VB_{real}$ | first vehicle body velocity |
| $VB_{ref}$ | second first vehicle body velocity |
| $VB_{ctrl}$ | estimated vehicle velocity |

**Claims**

1. A vehicle control device that controls an electric motor that drives a wheel of the vehicle, the vehicle control device comprising:

    a first calculating unit that calculates a first vehicle body velocity based on an angular velocity of the wheel;
    a second calculating unit that calculates a second vehicle body velocity based on an angular velocity of the electric motor at a cycle shorter than a cycle of the first calculating unit;
    an estimating unit that estimates an estimated vehicle body velocity according to a state of the vehicle, the estimated vehicle body velocity being calculated by using the first vehicle body velocity and the second vehicle body velocity in combination; and
    a controlling unit that controls, based on the estimated vehicle body estimated by the estimating unit, the electric motor.

2. The vehicle control device according to claim 1, wherein the estimating unit estimates a weighted average of the first vehicle body velocity and the second vehicle body velocity as the estimated vehicle velocity.

3. The vehicle control device according to claim 2, wherein
    in calculating the weighted average, when the first vehicle body velocity is lower or when the second vehicle body velocity is lower, the estimating unit sets a weight for the first vehicle body velocity to be smaller and a weight for the second vehicle body velocity to be larger.

4. The vehicle control device according to claim 2, wherein, when abnormality occurs on a wheel velocity sensor that detects the angular velocity of the wheel, the estimating unit sets a weight for the second vehicle body velocity to be large.

5. The vehicle control device according to any one of claims 1-4, wherein the second calculating unit calculates an estimated driving force that the wheel transmits to a road surface, the estimated driving force being based on a driving torque derived from the angular velocity of the electric motor and an inertia torque of the wheel, and calculates the second vehicle body velocity by integrating a quotient obtained by dividing the sum of the estimated driving force with a physical weight of the vehicle.

6. The vehicle control device according to any one of claims 1-5, wherein

    the vehicle comprises a differential mechanism that applies a torque difference to left and right wheels and a pair of electric motors coupled to the differential mechanism,
    the vehicle control device controls slip states of the left and right wheels independently of each other by controlling the pair of electric motors, and
    the controlling unit controls the slip states of the left and right wheels independently of each other, using the estimated vehicle body velocity.

FIG. 1

Right
Front ⟷ Rear
Left

1

25 (25R)
26 (26R)
5 (5R)

10

Vehicle control
device (ECU)

6 (6R)

First
calculating unit — 11

4 (4R)

21 — □
22 — □
23 — □
24 — □

INV

M

2 (2R)

Second
calculating unit — 12

BAT

3

Estimating unit — 13

INV

M

2 (2L)

Controlling unit — 16

4 (4L)

7

6 (6L)

26 (26L)

5 (5L)

25 (25L)

# FIG. 2

## FIG. 3

10

Vehicle control device
(ECU)

17
FF controlling
unit

$F$
Demanded
driving force

+ −

14
Arithmetic
unit

15
Llimiting
unit

16
Controlling unit
(FB controlling
unit)

+

+

$T$
Output
torque

26R
26L
First
calculating unit
11
$VB_{real}$

25R
25L
Second
calculating unit
12
$VB_{ref}$

13
Estimating
unit

$VB_{ctrl}$

$\hat{F}$
Estimated driving force

19
Driving force
observer unit

18
Model
calculating unit

# FIG. 4

Weighting factor

# FIG. 5

## INTERNATIONAL SEARCH REPORT

| International application No. |
|---|
| **PCT/JP2022/029415** |

| A. | CLASSIFICATION OF SUBJECT MATTER |
|---|---|

*B60L 3/00*(2019.01)i; *B60L 15/20*(2006.01)i; *G01P 3/56*(2006.01)i
FI:   B60L3/00 N; B60L15/20 S; B60L15/20 Y; G01P3/56 Z

According to International Patent Classification (IPC) or to both national classification and IPC

| B. | FIELDS SEARCHED |
|---|---|

Minimum documentation searched (classification system followed by classification symbols)

B60L3/00; B60L15/20; G01P3/56

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

| C. | DOCUMENTS CONSIDERED TO BE RELEVANT |
|---|---|

| Category* | Citation of document, with indication, where appropriate, of the relevant passages | Relevant to claim No. |
|---|---|---|
| X | JP 2017-73921 A (HITACHI AUTOMOTIVE SYSTEMS, LTD.) 13 April 2017 (2017-04-13) paragraphs [0008]-[0017] | 1 |
| Y | | 6 |
| A | | 2-5 |
| Y | JP 2000-309230 A (HONDA MOTOR CO., LTD.) 07 November 2000 (2000-11-07) paragraphs [0012], [0020], fig. 1, 2 | 6 |
| Y | JP 2007-49825 A (HITACHI, LTD.) 22 February 2007 (2007-02-22) paragraphs [0013], [0131], fig. 27 | 6 |
| A | JP 2020-162373 A (NISSAN MOTOR CO., LTD.) 01 October 2020 (2020-10-01) paragraphs [0183], [0186], [0202] | 1-6 |

☐ Further documents are listed in the continuation of Box C.  ☑ See patent family annex.

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| | |
|---|---|
| "T" | later document published after the international filing date or priority date and not in conflict with the application but cited to understand the principle or theory underlying the invention |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **05 October 2022** | **18 October 2022** |

| Name and mailing address of the ISA/JP | Authorized officer |
|---|---|
| **Japan Patent Office (ISA/JP)** 3-4-3 Kasumigaseki, Chiyoda-ku, Tokyo 100-8915 Japan | |
| | Telephone No. |

Form PCT/ISA/210 (second sheet) (January 2015)

**INTERNATIONAL SEARCH REPORT**
Information on patent family members

International application No.

**PCT/JP2022/029415**

| Patent document cited in search report | | | Publication date (day/month/year) | Patent family member(s) | Publication date (day/month/year) |
|---|---|---|---|---|---|
| JP | 2017-73921 | A | 13 April 2017 | US 2018/0290664 A1 paragraphs [0022]-[0037] EP 3360724 A1 CN 108136933 A | |
| JP | 2000-309230 | A | 07 November 2000 | (Family: none) | |
| JP | 2007-49825 | A | 22 February 2007 | US 2007/0038340 A1 paragraphs [0015], [0166], fig. 27 EP 1752332 A2 CN 1911706 A | |
| JP | 2020-162373 | A | 01 October 2020 | (Family: none) | |

Form PCT/ISA/210 (patent family annex) (January 2015)

**EP 4 353 513 A1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 4637136 B

- JP 2017073921 A